# EUROPEAN PATENT APPLICATION

(11) **EP 4 834 452 A1**
(43) Date of publication of application: **04.11.2026**
(21) Application number: 25815663.7
(22) Date of filing: 19.05.2025
(51) Int. Cl.: A63J 7/00, A63J 19/00

(54) **COSTUME GUIDING SYSTEM**

(30) Priority: 28.05.2024 JP 2024086402
(71) Applicant: On-Art Corporation, Tachikawa-shi, Tokyo, 190-0011 (JP)
(72) Inventor: KANEMARU Kazuya, Tachikawa-shi, Tokyo 190-0011 (JP)
(74) Representative: Klunker IP Patentanwälte PartG mbB
(86) International application number: PCT/JP2025/018118
(87) International publication number: WO 2025/249243

(57) **Abstract**

[Problem]

To provide a costume suit guidance system capable of guiding a costume suit to perform appropriate movement, motion, and staging.

[Solution]

A costume suit guidance system 1 for guiding a costume suit 10, allowing a pilot 2 to be positioned to support and operate the costume suit 10. The system 1 includes a plurality of monitors 21, 22 installed at positions to be capable of being visually recognized by the pilot 2 inside the costume suit 10, a costume-suit-mounted camera 30, an overview camera 40, and a communication device 50 capable of providing communication between the pilot 2 and a staff member 3 positioned outside the costume suit 10. The system is configured such that a current position and an operation situation of the costume suit 10 can be grasped by the pilot 2 through visual recognition of images E1, E2 from the costume-suit-mounted camera 30 and from the overview camera 40 on the monitors 21, 22. The operation and staging of the costume suit 10 are performed by the pilot 2 and the staff member 3 in response to the images E1, E2 on the monitors 21, 22 and information through the communication device 50.

## Description

### FIELD

The present invention relates to a costume suit guidance system for guiding a costume suit to perform appropriate movement, motion, and staging.

### BACKGROUND

Conventionally, there have been many shows and events using various costume suits modeled after dinosaurs. Such costume suits are configured such that a person inside performs predetermined operations to move the costume suit, operate the costume suit, and perform staging for shows and events (e.g., see Patent Document 1).

### LIST OF DOCUMENTS

### [Patent Document]

Patent Document 1: Japanese Patent Application Publication No. 2008-018164

### SUMMARY

### [Technical Problems]

However, a person operating inside the costume suit may not be able to see the surrounding situation from inside the costume suit or may not be able to see the movement of the costume suit, and therefore, in some cases, the person may not be able to perform appropriate movement. As a result, there have been problems in which the progress or staging of shows and events is adversely affected.

The present invention has been made in view of such problems, and an object thereof is to provide a costume suit guidance system capable of guiding a costume suit to perform appropriate movement, motion, and staging.

### [Means for Solving the Problems]

In order to achieve the abovementioned object, the present invention provides a costume suit guidance system for guiding a costume suit to perform arbitrary movement, allowing a pilot to be positioned at a predetermined operating position inside the costume suit to support and operate the costume suit. The system includes a plurality of monitors installed at positions to be capable of being visually recognized by the pilot positioned at the operating position inside the costume suit, a costume-suit-mounted camera arranged on the costume suit and connected to one of the monitors to display an image as viewed from the costume suit, an overview camera arranged at a position separated from the costume suit to provide overview of the costume suit and connected to another of the monitors, a communication device capable of providing communication between the pilot and a main staff member giving an instruction and positioned outside the costume suit, and a communication device capable of providing communication between the main staff member and a camera staff member positioned outside the costume suit. Here, the system is configured such that a current position and an operation situation of the costume suit can be grasped by the pilot through visual recognition of images from the costume-suit-mounted camera and from the overview camera on the monitors. Communication between the pilot and the camera staff member is blocked to prevent direct communication therebetween. The operation of the costume suit is performed by the pilot in response to information displayed on the monitor from the overview camera operated by the camera staff member according to the instruction of the main staff member and from the costume-suit-mounted camera and information from the main staff member through the communication device.

In an additional configuration of the costume suit guidance system of the present invention, the costume-suit-mounted camera and/or the overview camera are arranged in plural, and images displayed on the monitors are configured to be switchable automatically and/or manually.

In an additional configuration of the costume suit guidance system of the present invention, the costume suit is configured as one modeled after a quadrupedal animal; two pilots, namely, a foreleg operator in charge of controlling forelegs of the animal and a hind leg operator in charge of controlling hind legs of the animal, are positioned at respective operating positions in the costume suit, staging of the costume suit being to be operated and performed by the foreleg operator, the hind leg operator, and the staff member; the plurality of monitors include a plurality of monitors for the foreleg operator and a plurality of monitors for the hind leg operator; and images displayed on the monitors for the foreleg operator and the monitors for the hind leg operator are to be switchable.

In an additional configuration of the costume suit guidance system of the present invention, the costume-suit-mounted camera is arranged at least on a chest part of the costume suit to face forward.

In an additional configuration of the costume suit guidance system of the present invention, the costume-suit-mounted camera, the monitor displaying the image from the costume-suit-mounted camera, and an eye position of the pilot are arranged linearly.

In an additional configuration of the costume suit guidance system of the present invention, the communication device is a voice communication device enabling voice communication.

In an additional configuration of the costume suit guidance system of the present invention, the communication device is capable of displaying communication information in text and/or image.

According to the present embodiment, since the system has the plurality of cameras, the monitors, and the communication device that enables communication between the pilot and the staff member, and the pilot and/or the staff member operate and perform staging of the costume suit based on information therefrom, it is possible to guide the costume suit to perform appropriate movement, motion, and staging through multifaceted field of view and instructions.

According to the present invention, by switching and using images from the plurality of cameras, it is possible to perform confirmation from more multifaceted field of view with the limited monitors, and as a result, it is possible to more appropriately guide the costume suit to perform appropriate movement, motion, and staging.

Further, according to the present invention, even when there are two pilots, each pilot can confirm necessary images, and as a result, it is possible to guide the costume suit to perform appropriate movement, motion, and staging.

Further, according to the present invention, by having at least the costume-suit-mounted camera installed on the chest part to face forward, the pilot can obtain minimum necessary visual recognition information, and as a result, it is possible to guide the costume suit to perform appropriate movement, motion, and staging.

Further, according to the present invention, since the costume-suit-mounted camera, the monitor displaying the image therefrom, and the eye position of the pilot are arranged linearly, the pilot can see the external situation as if seeing through the wall of the costume suit beyond the monitor, can easily grasp the surrounding situation, and can easily perform appropriate movement and motion of the costume suit.

Further, according to the present invention, by having the voice communication device as the communication device for communication between the pilot and the staff member, it is possible to easily connect the pilot and the staff member and easily exchange information, and as a result, it is possible to guide the costume suit to perform appropriate movement, motion, and staging.

Further, according to the present invention, since the communication device for communication between the pilot and the staff member is configured such that communication information can be displayed in text and/or images, it is possible to appropriately connect the pilot and the staff member and reliably exchange information in cases where sound is difficult to be heard, cases where instructions are easier to understand when displayed in text or images, and cases where it is desired to keep instructions displayed for a while, and as a result, it is possible to guide the costume suit to perform appropriate movement, motion, and staging.

### BRIEF DESCRIPTION OF DRAWINGS

FIG. 1 is a schematic view showing a costume suit guidance system according to an embodiment of the present invention.
FIG. 2 is a schematic view showing monitors displaying images from a costume-suit-mounted camera and an overview camera in the costume suit guidance system according to the embodiment.
FIG. 3 is a block diagram of the costume suit guidance system according to the embodiment.

### DETAILED DESCRIPTION

Hereinafter, embodiments of the present invention will be described.

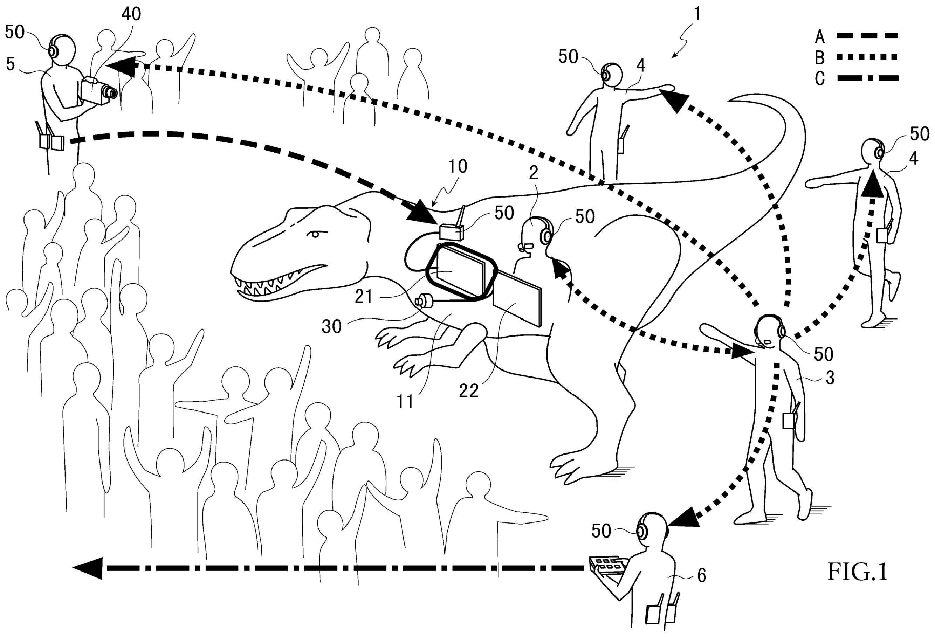

FIGs. 1 to 3 show the embodiment of the present invention.

A costume suit guidance system 1 of the present embodiment is a system for guiding a costume suit 10 to perform arbitrary movement, and here, as shown in FIG. 1, includes a dinosaur costume suit 10 and staff members 3, 4, 5, 6 for guiding the costume suit 10 to perform appropriate movement, motion, and staging. Note that the present invention is not limited to application to the dinosaur costume suit 10, and may be applied, for example, to those modeled after so-called monsters (fictitious creatures), ancient creatures such as mammoths, or other animals such as giraffes, rhinoceroses, elephants, lions, and tigers. Further, the present invention may be applied to those modeled after things other than animals (including living things and non-living things) such as robots and trees.

First, the costume suit 10 will be described with reference to FIG. 1. The costume suit 10 of the present embodiment is modeled after a bipedal dinosaur, and is configured such that one pilot 2 who supports and operates the costume suit 10 is positioned at a predetermined operating position inside the costume suit 10. The pilot 2 is in charge of operations such as walking (movement) of the costume suit 10, motion of the arms, motion of the face (movement of the neck, opening and closing of the mouth, movement of eyeballs, etc.), and motion of the tail. Note that examples of the operating position include a position such as an upper position of a leg part of the dinosaur where a person can enter and perform operations of the dinosaur without problems. Further, a cockpit may be formed so that the pilot 2 is held and supported at the operating position. Here, description of the mechanism and configuration inside the costume suit 10 for performing operations of the costume suit 10 is omitted.

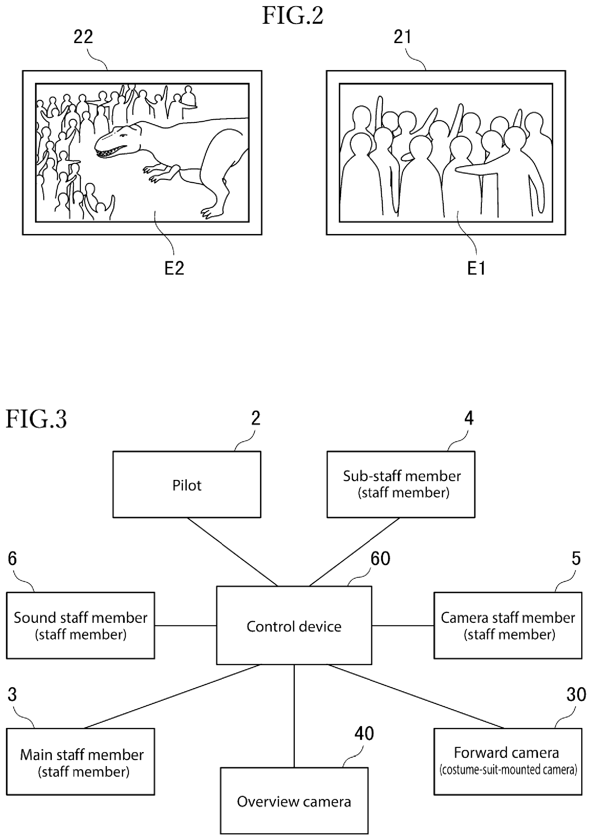

Further, inside the costume suit 10, a plurality of monitors 21, 22 (in the present embodiment, two monitors arranged side by side) are installed at positions so as to be visually recognized by the pilot 2 at the operating position. Here, as shown in FIG. 2, a costume-suit-mounted camera 30 is arranged on the costume suit 10 and connected to a monitor 21 which is arranged on a right side as viewed from the pilot 2 so as to display an image E1 as viewed from the costume suit 10, and an external camera 40 is arranged at a position separated from the costume suit 10 and connected to a monitor 22 which is arranged on a left side as viewed from the pilot 2 to display an image E2 providing overview of the costume suit 10. Note that the arrangement of the monitors 21, 22 is not limited to side-by-side arrangement, and may be appropriately arranged vertically, diagonally, or the like in consideration of the internal structure of the costume suit 10, the physique of the pilot 2, visibility, and the like.

In the costume suit 10 described above, there may be cases where the pilot 2 cannot directly see the external situation, and the information from the monitors 21, 22 enables the pilot 2 to simultaneously visually recognize the images E1, E2 from the costume-suit-mounted camera 30 and the overview camera 40 on the plurality of monitors 21, 22, thereby enabling simultaneous grasping of the current position and the operation situation of the costume suit 10. Note that here, the image E2 from the overview camera 40 is to be sent to the monitor 22 via a communication device 50 of the costume suit 10 from a communication device held by a camera staff member 5 who operates the overview camera 40, by video communication indicated by arrow A.

Note that, in the present embodiment, the costume-suit-mounted camera 30, the monitor 21, and an eye position of the pilot 2 are arranged linearly. Further, in the present embodiment, a shooting direction (forward direction) of the mounted camera 30, a screen angle of the monitor 21, and a line of sight of the pilot 2 are arranged on a straight line. Here, the shooting direction (forward direction) of the mounted camera 30, the screen angle of the monitor 21, and the line of sight of the pilot 2 are arranged on a straight line parallel to the ground. Due to the arrangement described above, the pilot 2 can see the external situation as if seeing through the wall of the costume suit beyond (here, directly in front of) the monitor 21, can easily grasp the surrounding situation, and can easily perform appropriate movement and motion of the costume suit 10.

Further, in the present embodiment, the system includes the communication device 50 that enables communication between a main staff member 3 positioned outside the costume suit 10 and the pilot 2, and here, a voice communication device such as a transceiver is provided (see arrow B indicating voice communication). Note that, in the present embodiment, the system is configured such that the pilot 2 communicates with only the main staff member 3 through the communication device 50 and does not directly communicate with the other staff members 4, 5, 6. This is to prevent the pilot 2 from being confused by multiple instructions and information being given to the pilot 2.

In this manner, the system is configured such that the pilot 2 operates the costume suit in response to information from the monitors 21, 22 and information from the communication device 50. Further, the system is configured such that a sub-staff member 4, a camera staff member 5, and a sound staff member 6 operate according to instructions from the main staff member 3 (see arrow B indicating voice communication). As a result, the system is configured such that the camera staff member 5 changes an arrangement position of the overview camera 40, or changes an angle of the image or angle of view. Further, the sound staff member 6 causes equipment (speakers and the like) for sound effects to perform sound and light effects for staging according to instructions from the main staff member 3 (see arrow C indicating sound communication). Further, the system is configured such that the sub-staff member 4 confirms the situation of the costume suit 10, and the main staff member 3 gives instructions to the pilot 2 to perform appropriate actions and operations based on a report of the confirmation (see arrow B indicating voice communication).

Note that here, the costume-suit-mounted camera 30 is arranged at least on a chest part 11 of the dinosaur to face forward.

Further, the costume-suit-mounted camera 30 and the overview camera 40 do not have to be one each, and a plurality of overview cameras 40 may be arranged at different locations. Further, there may be a plurality of camera staff members 5, each moving to secure an angle of view for making it easy to grasp the whole. Further, at least one (or a plurality) of the overview cameras 40 may be arranged on a flying object such as a drone, and may be configured to shoot while flying. Further, as for the costume-suit-mounted camera 30, a plurality of cameras may be provided, and for example, in addition to the camera 30 on the chest part 11, other cameras may be provided on the head, nose tip, back, tail, and the like. Furthermore, these cameras may be configured to be switchable manually by the pilot 2 or the main staff member 3, or may be configured to be switched automatically.

In this case, for example, as shown in FIG. 3, an AI-equipped control device 60 is electrically connected to the staff members 3, 4, 5, 6, the pilot 2, a forward camera (costume-suit-mounted camera) 30 of the costume suit 10, the overview camera 40, and the like, and may be configured to automatically perform switching to an optimal combination of cameras according to the situation of the costume suit 10 and the progress status of the event. Note that, although not shown, the control device 60 may be electrically connected to the monitors 21, 22, and the control device 60 may control switching of display states of the monitors 21, 22. Further, the control device 60 may be electrically connected to and control other devices and equipment as well.

Furthermore, the system may be configured to give instructions to the pilot 2 and other staff members after grasping the situation. Further, the main staff member 3 may give instructions through the control device 60. In this case, the control device 60 may be configured to give details and instructions to the other staff members, the pilot 2, the cameras 30, 40, the monitors 21, 22, sound equipment, and the like after the main staff member 3 transmits an outline to the control device 60. The control device 60 may be mounted on the costume suit 10, may be installed externally, or may be in a state of being carried by any of the staff members 3, 4, 5, 6. Further, the entire staging may be stored in the control device 60, and the control device 60 may be configured to give instructions to each part based on the staging.

Further, as for the interaction with the main staff member 3, the main staff member 3 may be configured as an AI robot, and the robot may make judgments and give instructions to the pilot 2.

Further, the control device 60 does not have to be provided in the costume suit 10 and may be arranged at another location, and may be connected to the staff members 3, 4, 5, 6, the pilot 2, and the like by communication.

Further, the communication device between the staff members 3, 4, 5, 6 and the pilot 2 is not limited to a voice communication device, and transmission may be enabled by a text communication device such as a chat system. Further, communication information in text may be displayed on the monitor 21 and/or the monitor 22 in real-time (or displayed later). Furthermore, a separate display device may be provided to display communication information in text. Further, in this case, images or videos may be displayed together with text, or instead of text.

Note that, in the present embodiment, the main staff member 3 is configured as one person, but the present invention is not limited to this, and there may be patterns in which two or more main staff members 3 exist. For example, a main staff member 3 (command main staff member) who serves as a command center for the entire staging may be arranged, the command main staff member 3 may give instructions to a staging main staff member 3 for cameras and staging and an operation main staff member 3 who gives instructions to the pilot 2, and instructions to the other staff members 4, 5, 6 and the pilot 2 may be given through each main staff member 3.
Further, a plurality of main staff members 3 may exist depending on the movement situation and staging situation of the costume suit 10, and when the costume suit 10 reaches a predetermined position or when the costume suit 10 starts predetermined staging, a handover may be performed from one main staff member 3 to another main staff member 3. Further, in other situations as well, there may be patterns in which the main staff member 3 is configured of a plurality of persons.

As described above, according to the present embodiment, since the system has the plurality of cameras 30, 40, the monitors 21, 22, and the communication device 50 that enables communication between the pilot 2 and the staff member 3, and the pilot 2 and/or the staff member 3 operate and perform staging of the costume suit 10 based on information therefrom, it is possible to guide the costume suit 10 to perform appropriate movement, motion, and staging through multifaceted field of view and instructions.

Further, according to the present embodiment, by switching and using images from the plurality of cameras 30, 40, it is possible to perform confirmation from more multifaceted field of view with the limited monitors 21, 22, and as a result, it is possible to more appropriately guide the costume suit 10 to perform appropriate movement, motion, and staging.

Further, according to the present embodiment, by having at least the costume-suit-mounted camera 30 installed on the chest part 11 of the costume suit 10 (here, the dinosaur) to face forward, the pilot 2 can obtain minimum necessary visual recognition information, and as a result, it is possible to guide the costume suit 10 to perform appropriate movement, motion, and staging.

Further, according to the present embodiment, since the costume-suit-mounted camera 30, the monitor 21 displaying the image therefrom, and the eye position of the pilot 2 are arranged linearly, the pilot 2 can see the external situation as if seeing through the wall of the costume suit 10 beyond the monitor 21, can easily grasp the surrounding situation, and can easily perform appropriate movement and motion of the costume suit 10.

Further, according to the present embodiment, by having the voice communication device as the communication device 50 for communication between the pilot 2 and the staff member 3, it is possible to easily connect the pilot 2 and the staff member 3 and easily exchange information, and as a result, it is possible to guide the costume suit 10 to perform appropriate movement, motion, and staging.

Further, according to the present embodiment, since the communication device 50 for communication between the pilot 2 and the staff member 3 is configured such that communication information can be displayed in text and/or images, it is possible to appropriately connect the pilot 2 and the staff member 3 and reliably exchange information in cases where sound is difficult to be heard, cases where instructions are easier to understand when displayed in text or images, and cases where it is desired to keep instructions displayed for a while, and as a result, it is possible to guide the costume suit 10 to perform appropriate movement, motion, and staging.

Note that the present invention is not limited to those according to the above-described embodiments, and can be applied to other configurations and other usage situations.

For example, in the above-described embodiments, description has been performed on a case in which guidance and staging are performed for the costume suit 10 modeled after a bipedal dinosaur as shown in FIG. 1, but the present invention is not limited to this, and the present system may be applied to guidance and staging for costume suits modeled after other dinosaurs. For example, the present system may be applied to a costume suit modeled after a quadrupedal dinosaur such as Stegosaurus.

In this case, in the costume suit, two pilots, namely, a foreleg operator in charge of controlling the forelegs of the dinosaur and a hind leg operator in charge of controlling the hind legs of the dinosaur, may be positioned at respective operating positions. Further, the system may be configured such that the foreleg operator, the hind leg operator, and the staff members operate and perform staging of the costume suit.

Further, in this case, the system may have a plurality of monitors for the foreleg operator and a plurality of monitors for the hind leg operator, and images displayed on the monitors for the foreleg operator and the monitors for the hind leg operator may be changeable automatically and/or manually.

As a result, even when there are two pilots, each pilot can confirm necessary images, and as a result, it is possible to guide the costume suit to perform appropriate movement, motion, and staging.

Further, in the above-described embodiments, the pilot 2 is capable of communicating with only the main staff member 3 without communicating directly with the other staff members 4, 5, 6 in order to prevent the pilot 2 from being confused by multiple instructions and information, but the present invention is not limited to this, and depending on the situation or state, the pilot 2 may be capable of directly communicating with a plurality of staff members 3, 4, 5, 6. Further, not only between the pilot 2 and the staff members 3, 4, 5, 6, but also among the staff members, simultaneous connection communication among a plurality of persons may be possible. In this case, not only voice but also visual information such as text, images, and videos may be shared simultaneously.

Further, as various cameras including the forward camera 30 and the overview camera 40 used in the above-described embodiments, in addition to ordinary cameras for image shooting (video cameras), for example, cameras with appropriately improved functionality such as action cameras, 360-degree omnidirectional cameras, and stereoscopic cameras may be used.

Further, as for a method of displaying images on the monitors 21, 22, for example, stereoscopic viewing may be enabled by using VR goggles, or projection may be enabled. In this manner, an appropriate device may be used if the pilot 2 is thereby enabled to more easily perform movement, operation, and staging of the costume suit 10.

Further, as described above, the present invention is not limited to application to dinosaurs, and may be applied to staging and motion of fictitious creatures such as monsters, other animals, and other costume suits other than animals.

### [Reference Signs List]

1 Costume suit guidance system
2 Pilot
3 Main staff member (staff member)
4 Sub-staff member (staff member)
5 Camera staff member (staff member)
6 Sound staff member (staff member)
10 Costume suit
11 Chest part
21 First monitor (monitor)
22 Second monitor (monitor)
30 Forward camera (costume-suit-mounted camera)
40 Overview camera
50 Voice communication device (communication device)
60 Control device
E1 Forward image
E2 Overview image
A Video communication
B Voice communication
C Sound communication

## Claims

1. A costume suit guidance system for guiding a costume suit to perform arbitrary movement, allowing a pilot to be positioned at a predetermined operating position inside the costume suit to support and operate the costume suit,
the system comprising:
a plurality of monitors installed at positions to be capable of being visually recognized by the pilot positioned at the operating position inside the costume suit;
a costume-suit-mounted camera arranged on the costume suit and connected to one of the monitors to display an image as viewed from the costume suit;
an overview camera arranged at a position separated from the costume suit to provide overview of the costume suit and connected to another of the monitors;
a communication device capable of providing communication between the pilot and a main staff member giving an instruction and positioned outside the costume suit; and
a communication device capable of providing communication between the main staff member and a camera staff member positioned outside the costume suit,
the system being configured such that a current position and an operation situation of the costume suit can be grasped by the pilot through visual recognition of images from the costume-suit-mounted camera and from the overview camera on the monitors,
communication between the pilot and the camera staff member being blocked to prevent direct communication therebetween, and
the operation of the costume suit being performed by the pilot in response to the images displayed on the monitor from the overview camera operated by the camera staff member according to the instruction of the main staff member and from the costume-suit-mounted camera and information from the main staff member through the communication device.

2. The costume suit guidance system according to claim 1,
wherein the costume-suit-mounted camera and/or the overview camera are arranged in plural, and
images displayed on the monitors are configured to be switchable automatically and/or manually.

3. The costume suit guidance system according to claim 1,
wherein the costume suit is configured as one modeled after a quadrupedal animal,
two pilots, namely, a foreleg operator in charge of controlling forelegs of the animal and a hind leg operator in charge of controlling hind legs of the animal, are positioned at respective operating positions in the costume suit, staging of the costume suit being to be operated and performed by the foreleg operator, the hind leg operator, and the staff member,
the plurality of monitors include a plurality of monitors for the foreleg operator and a plurality of monitors for the hind leg operator, and
images displayed on the monitors for the foreleg operator and the monitors for the hind leg operator are to be switchable.

4. The costume suit guidance system according to claim 1,
wherein the costume-suit-mounted camera is arranged at least on a chest part of the costume suit to face forward.

5. The costume suit guidance system according to claim 1,
wherein the costume-suit-mounted camera and the monitor displaying the image from the costume-suit-mounted camera are arranged on a straight line parallel to the ground.

6. The costume suit guidance system according to claim 1,
comprising an AI-equipped control device,
wherein the control device is configured to perform switching control of display states of the monitors and to give instructions to the camera staff member and the pilot in response to an instruction from the main staff member.

7. The costume suit guidance system according to claim 1,
comprising an AI-equipped control device,
wherein the control device is configured to automatically perform switching control of display states of the monitors and to give instructions to the camera staff member and the pilot in response to a staging situation.
